# EUROPEAN PATENT SPECIFICATION

(11) **EP 1 441 531 B1**
(45) Date of publication and mention of the grant of the patent: **18.06.2008**
(21) Application number: 03250387.2
(22) Date of filing: 22.01.2003
(51) Int. Cl.: H04N 7/20, H04B 1/16

(54) **Method and apparatus for power supply to a low noise block (LNB)**
Vorrichtung und Verfahren für die Leistungsversorgung eines rauscharmen Abwärtsumsetzerblocks (LNB)
Dispositif et procédé d'alimentation en puissance d'un bloc convertisseur à faible bruit (lnb)

(43) Date of publication of application: 28.07.2004
(73) Proprietor: Pace Micro Technology Plc, Shipley, West Yorkshire BD18 3LF (GB)
(72) Inventor: Lawson, Nicholas, Saltaire, Shipley BD18 3LF (GB)
(74) Representative: Wood, Graham

(56) References cited:
- EP-A- 1 244 308
- US-A- 6 144 569
- PATENT ABSTRACTS OF JAPAN vol. 1998, no. 04, 31 March 1998 (1998-03-31) & JP 09 327123 A (FUJITSU GENERAL LTD), 16 December 1997 (1997-12-16)

## Description

The invention to which this application relates is a method for the control and application of power to a low noise block device and/or associated apparatus connected to a broadcast data receiver.

The broadcast data receiver (BDR) is a device which is typically located in a premises of a subscriber to a satellite television broadcaster. The broadcast data receiver is used to process data received at the premises and generate the same to allow the generation of television, radio and/or associated functions which are viewed and/or listened to via a connected display screen and speakers. With satellite transmission systems the data is received at the premises via a satellite antenna at which there is provided a low noise block and which, in turn, is connected to the broadcast data receiver. The connection between the low noise block and the broadcast data receiver is typically via a cable connection which allows the passage of the data received from the low noise block to the broadcast data receiver for subsequent processing and in addition, the supply of electrical power to the low noise block to allow the same to be operational from the broadcast data receiver.

When the BDR is in a closedown or standby condition, then it is typically the case that no power is provided to the low noise block (LNB). However, at the time of the BDR being switched on or activated then a power supply is provided from the BDR to the LNB to allow the LNB to be operational to receive the data.

Systems are known for recovering from interruptions in the power supply, as for example disclosed in US6144569, and for maintaining voltage levels at the LNB at a sufficiently high level when under load, as disclosed in EP1244308.

In some instances, the LNB can have a significant capacitive load acting on the same such that when the power supply, which is typically 13 or 18 volts, is first applied to the LNB, then the increase in the LNB voltage level, which will always take a finite time to rise from zero, will vary depending on the characteristics of the load on the LNB at that time.

However, in practise, the rise in the voltage level is checked after a period of time from switch on and is required to rise above a predetermined threshold value. When the voltage does rise above the threshold, then the control system for the LNB identifies that the system is working correctly and normal operation of the BDR and LNB proceeds. However, if after the predetermined time, the check is made and the voltage level has not risen above the threshold value then the control system interprets the same as a system short circuit and the power supply to the LNB is immediately turned off. Conventionally, the control system will attempt to reapply power to the LNB after a certain period of time has passed so as to check whether the fault is still present by monitoring if the threshold voltage level is reached in a pre-determined time period.

A problem with this conventional check system is that at each attempt, when the voltage is applied to the LNB, it starts from a zero volts value and therefore if the load on the LNB remains the same then the LNB may in fact be operating correctly but the voltage level can simply not reach the threshold value in the time allocated for the initial check. As a result the power supply is incorrectly switched off to the LNB at each check due to the fact that the threshold level is not reached. This therefore means that the LNB can currently be deemed to be inoperable, defective and may involve the calling out of an engineer to fix the same when in fact the LNB and the associated apparatus is operating correctly.

While there is a problem, it is not possible to simply extend the time available before the check is made as if the LNB is in fact defective and a short circuit is occurring, it is desired that this is determined as soon as possible in order to avoid damage to the system and therefore the time at which the check is made is required to be kept relatively short after the application of the power supply.

The aim of the present invention is to provide a control system for the initial application of power to an LNB which allows the testing of the LNB power supply to occur in a safe and effective manner so as to avoid damage by malfunction but also to allow the application of the power over said check period in such a manner as to ensure that operational LNB apparatus can be identified and allowed to operate and the power supply to the same is not incorrectly switched off.

In a first aspect of the invention there is provided Broadcast data receiving apparatus comprising:
a broadcast data receiver in a premises;
a control system provided with checking means;
a satellite antenna connected to said broadcast data receiver;
said satellite antenna including a low noise block (LNB), power to the LNB provided via the broadcast data receiver; and,
upon the power supply being applied to the LNB, the checking means performs a check within a predefined check time period to ascertain whether the power supply voltage level at the LNB has reached a predetermined threshold; and
if the voltage level exceeds the threshold then the LNB is deemed to be operable and if below the threshold is deemed to be inoperable and the power supply removed and
characterised in that if, after the first application of power the threshold is not reached, the control means switches the power supply on again before the voltage level decays to zero, and the voltage level is again checked against the threshold and, if above same, the LNB is deemed operable.

Typically the application of the power supply to the LNB can be repeated as many times as possible within the said predetermined check time period.

Typically, the time interval between the first, second and any successive applications of power to the LNB within the predetermined check time period, is such that although some drop in voltage level at the LNB may occur, there is not sufficient time for the same to return to zero before the second and/or successive applications of power.

In use, if the control system for the LNB is inoperable then the short circuit which is occurring will prevent any significant voltage level being indicated regardless of the number of power applications. Hence failure of the apparatus and system will still be detected but if the voltage at the LNB is not reaching the threshold because of the capacitive load at the LNB, but the same is still operable, then this method ensures that the threshold level can be reached within the predetermined test time period.

In a further aspect of the invention there is provided a method of applying a power supply to broadcast data receiving apparatus comprising a broadcast data receiver connected to a satellite antenna including a low noise block (LNB), and a power supply to the LNB provided via the broadcast data receiver and control means for the application of the power supply to the LNB and including the steps of:
applying the power supply to the LNB,
checking the power supply voltage level at the LNB,
comparing the voltage level to a predetermined threshold and,
if the voltage level exceeds the threshold then the LNB is deemed to be operable,
if below the threshold the LNB is deemed not to be operating and the power supply is removed for a period of time and then reapplied to the LNB and the voltage level is again checked against the threshold; and
during the period in which the power supply is removed a voltage level drop occurs at the LNB;
characterised in that the power supply is reapplied to the LNB before the voltage level at the LNB decays to 0 Volts.

In one embodiment if, upon the second application of power, the voltage level at the LNB exceeds the threshold, the LNB is deemed to be operable. If upon the second application of power the voltage level at the LNB is below the threshold, the LNB is deemed to be inoperable and, the power level is removed for a period of time and reapplied a repeated number of times as necessary within a predefined period of time.

In one embodiment when the previously applied power supply is switched off the same is controlled to be off for sufficient time to allow a voltage level drop at the LNB. However preferably the power supply is switched back on to the LNB within a period of time so as to prevent the voltage level at the LNB reaching 0 Volts.

Specific embodiments of the invention will now be described with reference to the accompanying diagrams, wherein:-
Figure 1 illustrates a conventional control system test for a voltage at the LNB;
Figure 2 illustrates an LNB test system according to the present invention; and
Figure 3 illustrates a connection between a BDR and LNB in a premises.

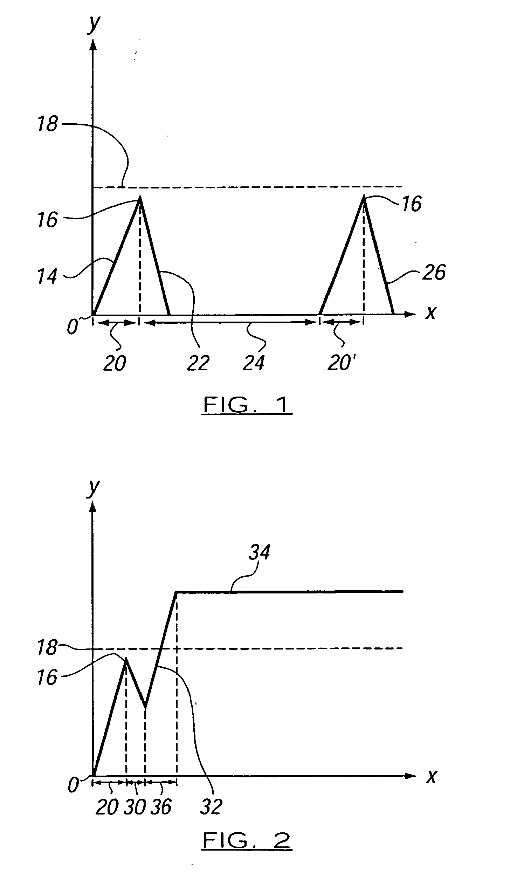

Figure 1 illustrates a conventional power up system for an LNB in a graphical manner wherein the voltage level of the LNB is indicated on the Y axis and the time is indicated on the X axis. At point 0, no power is supplied to the LNB.

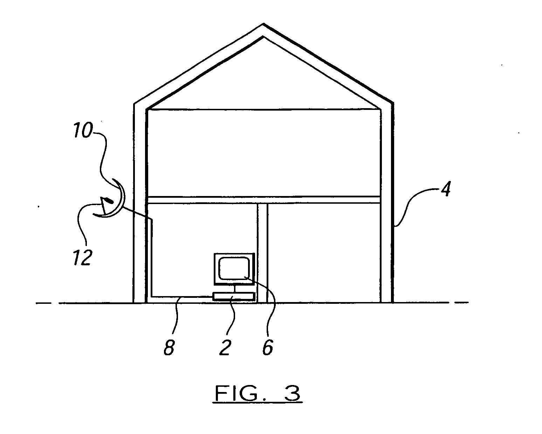

The layout of a typical system is illustrated with respect to Figure 3 wherein there is provided a broadcast data receiver (BDR) 2 provided within a premises 4, typically in a lounge and connected to a television set 6. The BDR 2 is in turn connected via connection cable 8 to a satellite antenna 10, and in particular the LNB 12 thereon, with the connection 8 providing a power supply from the BDR to the LNB 12, as well as allowing the transfer of data from the LNB to the BDR.

When the BDR 2 is in a standby or off condition, no power supply is provided to the LNB; however when the BDR is switched on to be active then the power supply is provided along the connection 8 to the LNB 12.

With reference to Figure 1, in the conventional system, the slope 14 indicates the provision of the power supply from point 0 to a peak voltage level 16. If the peak is above the threshold value 18 the LNB is typically deemed to be operable. However, in the example given, the voltage level, even at peak 16 has not reached the threshold voltage value 18 within the voltage check time period indicated by arrow 20 at the end of which the measurement of the voltage level at peak 16 is taken. As the voltage level 16 has not reached threshold level 18 then the system is deemed to be inoperable. The inability to reach the threshold 18 can be due to a failure, such as a short circuit within the system, or may simply be due to capacitive loading which is not a genuine failure. However conventionally, and regardless of whether the failure is genuine or not, the power supply from the BDR is immediately stopped, hence causing the voltage level 22 to drop back to 0. Normally, the BDR will attempt to reapply power after allowing a period of time 24 to have elapsed which is designed to allow the control circuit to cool down and by which time the voltage stored in any capacitors has discharged. However, if the system is in fact operable but simply cannot reach the threshold level 18 in the given check time period 20 due to capacitive loading, any reattempt, as illustrated by the retry attempt 26, to apply voltage will again result in a peak 16 being reached in the given time period 20' and again result in the measured voltage level 16 being below the required threshold value 18 whereupon the control system for the LNB will simply assume that the same is still inoperable, even though the problem may only be caused by the capacitive load at the LNB and the LNB is in fact operable.

In accordance with the present invention as illustrated in Figure 2, the check of the voltage level at the LNB is still performed to provide an accurate indication of the voltage level at the LNB and the test is still taken within a sufficiently small time scale so as to prevent any damage being caused to the system if there is a genuine system failure such as by a short circuit or genuinely inoperable LNB.

With reference to Figure 2, there is illustrated the same apparatus and system as in Figure 1 with the method again illustrated in a graphical manner with the LNB voltage on the Y axis and the time on the X axis. At point 0, voltage is applied to the LNB when the BDR is switched on and the measurement of the voltage level peak 16 is taken after time period 20 and is again found to be below the voltage threshold 18. However, in contrast to the conventional system, a second attempt is made to provide the voltage to the LNB after a much shorter time period has elapsed than was the case with the time period 24 of Figure 1. In accordance with the invention, the new attempt to apply the voltage of the LNB is made at a time period 30 after the first voltage check and, as is illustrated in Figure 2, the voltage drop which occurs after peak 16 when the power supply to LNB is switched off after the first check does not return to a 0V level prior to the second application of the power supply as indicated by plot 32. This means that the new application of voltage serves to boost the voltage level as indicated to a level 34 which is clearly above the threshold level 18 and so, when the next check of voltage level is made at time 36, the voltage level 34 is above the threshold level and is therefore deemed to be sufficient for the LNB to be operable. It is possible that even third or successive attempts can be made to apply the power supply within the check time period if required. It will be appreciated that the check time period of the invention is not significantly greater than would be the case for the conventional system of Figure 1. If the LNB had genuinely short circuited then the power voltage peak 16 would not occur, and the voltage drop would be much greater, such that a genuine short circuit or inoperable LNB would not be boosted by the method of the invention and so a genuine fault will still be clearly identified in accordance with the method of the invention.

The present invention therefore allows the check procedure to be performed and genuinely operable LNB and associated apparatus is allowed to operate and only that apparatus which is genuinely at fault is disabled.

## Claims

1. Broadcast data receiving apparatus comprising:
a broadcast data receiver (2) in a premises (4);
control means provided with checking means;
a satellite antenna (10) connected to said broadcast data receiver (2);
said satellite antenna (10) including a low noise block (LNB, 12) wherein power to the LNB (12) is provided via the broadcast data receiver (2); and,
upon the power supply being applied to the LNB (12), the checking means performs a check within a predefined check time period to ascertain whether the power supply voltage level at the LNB (12) has reached a predetermined threshold (18); and
if the voltage level exceeds the threshold (18) then the LNB (12) is deemed to be operable and if below the threshold (18) is deemed to be inoperable and the power supply removed; and
**characterised in that** if, after the first application of power the threshold (18) is not reached, the control means switches the power supply on again before the voltage level decays to zero, and the voltage level is again checked against the threshold (18) and, if above same, the LNB (12) is deemed operable.

2. Apparatus according to claim 1 **characterised in that** the control means switch off and on the power supply to the LNB repetitively within the said predetermined check time period until and if the checked voltage level is above the threshold.

3. Apparatus according to claim 1 **characterised in that** if the control system for the LNB is inoperable then a short circuit occurs which prevents any significant voltage level being indicated regardless of the number of power supply applications.

4. Apparatus according to claim 1 **characterised in that** repeated applications of the power supply allows the voltage at the LNB to overcome capacitive load at the LNB within the predetermined test time period.

5. A method of applying a power supply to broadcast data receiving apparatus comprising a broadcast data receiver (2) connected to a satellite antenna (10) including a low noise block (LNB, 12), wherein power supply to the LNB (12) is provided via the broadcast data receiver (2) and control means for the application of the power supply to the LNB (12) and including the steps of:
applying the power supply to the LNB (12),
checking the power supply voltage level at the LNB (12),
comparing the voltage level to a predetermined threshold (18); and,
if the voltage level exceeds the threshold (18) then the LNB (12) is deemed to be operable,
if below the threshold the LNB (12) is deemed not to be operating and the power supply is removed for a period of time and then reapplied to the LNB (12) and the voltage level is again checked against the threshold; and
during the period in which the power supply is removed a voltage level drop occurs at the LNB (12);
**characterised in that** the power supply is reapplied to the LNB (12) before the voltage level at the LNB (12) reaches 0 Volts.

6. A method according to claim 5 **characterised in that** if upon, the second application of power the voltage level at the LNB exceeds the threshold, the LNB is deemed to be operable.

7. A method according to claim 5 **characterised in that** if upon the second application of power the voltage level at the LNB is below the threshold, the LNB is deemed to be inoperable.

8. A method according to claim 7 **characterised in that** the power level is removed for a period of time and reapplied a repeated number of times as necessary within a predefined period of time.

## Patentansprüche

1. Rundfunkdatenempfängervorrichtung die
einen Rundfunkdatenempfänger (2) in einem Gebäude (4) aufweist;
ein Steuerungsmittel mit einem Kontrollmittel;
und eine Satelittenantenne (10) die am Rundfunkdatemempfänger (2) angeschlossen ist;
wobei die genannte Satelittenantenne (10) einen rauscharmen Abwärtsumsetzerblock (LNB, 12) aufweist und der LNB (12) vom Rundfunkdatenempfänger (2) mit Strom versorgt wird; und
wobei bei Anlegen der Spannung an den LNB (12) das Kontrollmittel innerhalb eines vordefinierten Kontrollzeitraums prüft ob der am LNB (12) anliegende Spannungspegel einen vorbestimmten Schwellwert (18) erreicht hat; und
falls der Spannungspegel über dem Schwellwert (18) liegt der LNB (12) als betriebsfähig erachtet wird und falls der Spannungspegel unter dem Schwellwert (18) liegt der LNB als nicht betriebsfähig erachtet und die Versorgungsspannung nicht weiter angelegt wird; und
**dadurch gekennzeichnet, dass** falls der Schwellwert (18) beim ersten Anlegen der Spannung nicht erreicht wird, das Steuerungsmittel die Versorgungsspannung wieder anschaltet bevor der Spannungspegel auf Null abfällt und der Spannungspegel wieder mit dem Schwellwert (18) verglichen wird und falls er über dem Schwellwert liegt der LNB (12) als betriebsfähig erachtet wird.

2. Rundfunkdatenempfänger gemäß Anspruch 1, **dadurch gekennzeichnet, dass** das Steuerungsmittel die Versorgungsspannung zum LNB wiederholt im genannten vordefinierten Kontrollzeitraum an- und ausschaltet bis und falls die überprüfte Stromstärke über dem Schwellwert liegt.

3. Rundfunkdatenempfänger gemäß Anspruch 1, **dadurch gekennzeichnet, dass** falls das Kontrollsystem für den LNB nicht betreibbar ist ein Kurzschluss entsteht wodurch keine wesentliche Stromstärke angezeigt werden kann ungeachtet der Anzahl Aktivierungen der Versorgungsspannung.

4. Rundfunkdatenempfänger gemäß Anspruch 1, **dadurch gekennzeichnet, dass** wiederholtes Anlegen der Versorgungsspannung es der Spannung am LNB ermöglicht die kapazitive Belastung am LNB innerhalb des vorbestimmten Testzeitraums zu überwinden.

5. Verfahren zum Anlegen einer Versorgungsspannung an eine Rundfunkdatenempfängervorrichtung die einen Rundfunkdatenempfänger (2) aufweist der an einer Satelittenantenne (10) angeschlossen ist, einschließlich eines rauscharmen Abwärtsumsetzerblocks (LNB, 12) wobei der LNB (12) über den Rundfunkdatenempfänger (2) mit Spannung versorgt wird und einem Steuerungsmittel zum Anlegen der Versorgungsspannung am LNB (12) und einschließlich der folgenden Schritte:
Anlegen der Versorgungsspannung am LNB (12),
Kontrolle des Versorgungsspannungspegels am LNB (12),
Vergleichen des Spannungspegels mit einem vordefiniertem Schwellwert (18), und, falls der Spannungspegel über dem Schwellwert (18) liegt der LNB (12) als betriebsfähig erachtet wird,
und falls der Spannungspegel unter dem Schwellwert liegt, der LNB (12) als nicht betriebsfähig erachtet und die Versorgungsspannung für eine bestimmte Zeit abgeschaltet und dann wieder am LNB (12) angelegt wird und der Spannungspegel wieder mit dem Schwellwert verglichen wird; und
wobei während des Zeitraums in dem die Versorgungsspannung nicht anliegt der Spannungspegel am LNB (12) abfällt;
**dadurch gekennzeichnet, dass** die Versorgungsspannung wieder am LNB (12) angelegt wird bevor der Spannungspegel am LNB (12) auf 0 Volt abgesunken ist.

6. Verfahren gemäß Anspruch 5, **dadurch gekennzeichnet, dass** falles beim zweiten Anlegen der Versorgungsspannung der Spannungspegel am LNB über dem Schwellwert liegt der LNB als betriebsfähig erachtet wird.

7. Verfahren gemäß Anspruch 5, **dadurch gekennzeichnet, dass** falls beim zweiten Anlegen der Versorgungsspannung der Spannungspegel am LNB unter dem Schwellwert liegt der LNB als nicht betriebsfähig angesehen wird.

8. Verfahren gemäß Anspruch 7, **dadurch gekennzeichnet, dass** die der Versorgungsspannung für eine bestimmte Zeit unterbrochen und je nach Bedarf mehrere Male in einer vorbestimmten Zeit wieder angelegt wird.

## Revendications

1. Appareil de réception de données diffusées comprenant :
un récepteur de données diffusées (2) dans un endroit (4) ;
un moyen de commande doté d'un moyen de vérification ;
une antenne satellitaire (10) laquelle est connectée audit récepteur de données diffusées (2) ;
ladite antenne satellitaire (10) comportant un bloc convertisseur à faible bruit (LNB, 12), alors que l'énergie acheminée au LNB (12) est fournie par l'intermédiaire du récepteur de données diffusées (2) ; et
une fois que l'alimentation en énergie est appliquée au LNB (12), le moyen de vérification effectue un contrôle dans les limites d'une durée de vérification prédéfinie pour savoir si le niveau de tension de l'alimentation en énergie présente sur le LNB (12) a atteint un seuil prédéterminé (18) ; et
si le niveau de la tension dépasse le seuil (18), alors le LNB (12) est considéré comme étant opérationnel, et si le niveau de tension est inférieur au seuil (18) le LNB est considéré comme étant non-opérationnel et l'alimentation en énergie sera désactivée ; et
**caractérisé en ce que,** si le seuil (18) n'est pas atteint après la première application de l'énergie, le moyen de commande va de nouveau activer l'alimentation en énergie avant que le niveau de la tension ne tombe à zéro, et le niveau de tension est de nouveau vérifié par rapport au seuil (18) et, si la tension est supérieure au seuil, alors le LNB (12) est considéré comme étant opérationnel.

2. Appareil, selon la revendication 1, **caractérisé en ce que** le moyen de commande met hors circuit et met en circuit de façon répétitive l'alimentation en énergie se rendant au LNB, et ceci dans les limites de ladite durée de vérification prédéterminée jusqu'au moment où et si le niveau vérifié de la tension se situe au-dessus du seuil.

3. Appareil, selon la revendication 1, **caractérisé en ce que** si le système de commande pour le LNB n'est pas opérationnel, il se produit alors un court-circuit qui empêche l'indication de tout niveau de tension significatif, indépendamment du nombre de fois où l'alimentation en énergie est appliquée.

4. Appareil, selon la revendication 1, **caractérisé en ce que** des applications répétées de l'alimentation en énergie permettent à la tension présente sur le LNB de surmonter la charge capacitive présente sur le LNB dans les limites de la durée d'essai prédéterminée.

5. Procédé servant à appliquer une alimentation en énergie à un appareil de réception de données diffusées comprenant un récepteur de données diffusées (2) connecté à une antenne satellitaire (10), y compris un bloc convertisseur à faible bruit (LNB, 12), alors que l'alimentation en énergie acheminée au LNB (12) est fournie par l'intermédiaire du récepteur de données diffusées (2), et un moyen de commande pour assurer l'application de l'alimentation en énergie au LNB (12) et comportant les étapes consistant à :
appliquer l'alimentation en énergie au LNB (12),
vérifier le niveau de tension de l'alimentation en énergie présente sur le LNB (12),
comparer le niveau de tension par rapport à un seuil prédéterminé (18); et,
si le niveau de tension dépasse le seuil (18), alors le LNB (12) est considéré comme étant opérationnel,
si le niveau de tension est inférieur au seuil, le LNB (12) est considéré comme étant non-opérationnel et l'alimentation en énergie sera désactivée pendant un certain intervalle de temps, et puis elle est ré-appliquée au LNB (12), et le niveau de tension est de nouveau vérifié par rapport au seuil ; et
durant l'intervalle de temps pendant lequel l'alimentation en énergie est désactivée, il se produira une chute du niveau de tension sur le LNB (12) ;
**caractérisé en ce que** l'alimentation en énergie est ré-appliquée au LNB (12) avant que le niveau de tension présent sur le LNB (12) n'atteigne 0 Volts.

6. Procédé, selon la revendication 5, **caractérisé en ce que** si le niveau de tension présent sur le LNB est supérieur au seuil, après avoir appliqué l'énergie une deuxième fois, le LNB est alors considéré comme étant opérationnel.

7. Procédé, selon la revendication 5, **caractérisé en ce que** si le niveau de tension présent sur le LNB est inférieur au seuil après avoir appliqué l'énergie une deuxième fois, le LNB est alors considéré comme étant non-opérationnel.

8. Procédé, selon la revendication 7, **caractérisé en ce que** le niveau d'énergie est supprimé pendant un certain intervalle de temps, et est ré-appliqué un nombre répété de fois, en fonction des besoins, dans les limites d'une durée prédéfinie.
